# EUROPÄISCHE PATENTSCHRIFT

(11) **EP 3 729 549 B1**
(45) Veröffentlichungstag und Bekanntmachung des Hinweises auf die Patenterteilung: **07.06.2023**
(21) Anmeldenummer: 18814537.9
(22) Anmeldetag: 29.11.2018
(51) Int. Cl.: H01M 8/04223, H01M 8/04225, H01M 8/04791, H01M 8/04746, H01M 8/04858, H01M 8/04302

(54) **VERFAHREN ZUM STARTEN EINER BRENNSTOFFZELLE**
METHOD FOR STARTING UP A FUEL CELL
PROCÉDÉ POUR DÉMARRER UNE PILE À COMBUSTIBLE

(30) Priorität: 18.12.2017 DE 102017011925
(43) Veröffentlichungstag der Anmeldung: 28.10.2020
(73) Patentinhaber: cellcentric GmbH & Co. KG, 73230 Kirchheim unter Teck (DE)
(72) Erfinder: PASTOR NIGORRA, Pere, Antoni, 72074 Tübingen (DE); SCHMALZRIEDT, Sven, 73728 Esslingen (DE); FELLOWS, Richard, Vancouver, BC V5S 4K3 (CA); IWAN, Laura, Burnaby, BC V5J 2Z2 (CA)
(74) Vertreter: Wallinger Ricker Schlotter Tostmann
(86) Internationale Anmeldenummer: PCT/EP2018/083011
(87) Internationale Veröffentlichungsnummer: WO 2019/120927

(56) Entgegenhaltungen:
- DE-A1-102011 010 482
- DE-A1-102015 225 507
- US-A1- 2009 311 560

## Beschreibung

Die Erfindung betrifft ein Verfahren zum Starten einer Brennstoffzelle in einem Brennstoffzellensystem bei Temperaturen unterhalb des Gefrierpunkts von Wasser.

Ein Start einer Brennstoffzelle bei solchen Bedingungen wird auch als Gefrierstart oder englischsprachig als "Freeze Start" bzw. "Freeze Start Up" bezeichnet. Dabei gibt es verschiedene Methoden, einen solchen Gefrierstart für Brennstoffzellen zu realisieren. Häufig ist es einfach so, dass eine Aufheizung der Brennstoffzelle direkt oder mittelbar über das Kühlmedium erfolgt. Hierfür kann beispielsweise eine Verbrennungsvorrichtung oder eine elektrische Heizeinrichtung vorgesehen sein. In diesem Zusammenhang kann rein beispielhaft auf die US 2004/0247965 A1 oder die DE 10 2008 060 534 A1 hingewiesen werden. In einer weiteren Schrift, nämlich der US 2004/0013915 A1, wird vorgeschlagen, die Brennstoffzelle zur Erwärmung umgekehrt, also als Elektrolyseur, zu nutzen. Der Nachteil bei einem derartigen Aufbau besteht darin, dass immer zusätzliche Energie bzw. zusätzliche Anbauteile benötigt werden, und dass dies zu einer entsprechend hohen Komplexität des Systems sowohl in seinem Aufbau als auch hinsichtlich seiner Steuerung führt.

Die DE 10 2011 010 482 A1 beschreibt ein Startverfahren zum Beschleunigen des Starts eines Brennstoffzellensystems. Dabei wird der Druck der Anode abwechselnd erhöht und reduziert. Somit wird die Anode quasi mechanisch Freigeblasen, um dann Starten zu können.

Die DE 10 2015 225 507 A1 beschreibt das elektrochemische Pumpen von Wasserstoff auf die kathodenseite zur Verbesserung des Starts einer Brennstoffzelle. Dabei geht es um die Aktivierung des Katalysators, was von einem Gefrierstart unabhängig ist. Dazu wird ein hoher Strom an die Brennstoffzelle angelegt.

Die US 2009/0311560 A1 beschreibt ebenfalls ein Startverfahren für eine Brennstoffzelle. Dabei wird diese zuerst mit Wasserstoff und Sauerstoff auf der Kathoden und Anodenseite betreiben zund dann in einem zweiten Schritt umgekeht mit Sauerstoff und Wasserstoff auf der Kathoden und Anodenseite.

Weitere Möglichkeiten bestehen darin, die Brennstoffzelle bereits vor dem Wiederstart entsprechend vorzubereiten, beispielsweise diese im Rahmen einer Abschaltprozedur möglichst auszutrocknen, um so zu verhindern, dass Wasser vorhanden ist, welches einfrieren kann. Auch dies ist in der Anwendung entsprechend komplex und zeitaufwändig. Außerdem ist das Austrocknen für die Membranen einer beispielsweise als PEM-Brennstoffzelle ausgestalteten Brennstoffzelle eher nachteilig und wirkt sich negativ auf die Lebensdauer aus.

Eine Alternative besteht darin, das Brennstoffzellensystem dadurch aufzuheizen, dass dieses in Betrieb genommen wird und indem es Strom in Abhängigkeit der möglichen Zellbelastung produziert. Aus der DE 10 2007 050 856 A1 ist dafür beispielsweise der Betrieb des Brennstoffzellensystems mit einem optimierten Stromdichte-Zeit-Verlauf beschrieben. In eine ähnliche Richtung geht auch die DE 10 2007 033 429 A1, welche die zusätzliche elektrische Belastung der Brennstoffzelle beispielsweise über einen Systemkompressor beschreibt.

Diese letztgenannten Verfahren sind dabei problematisch, da der Betrieb einer mit Eis blockierten Einzelzelle innerhalb der typischerweise als Stapel von Einzelzellen aufgebaute Brennstoffzelle zu einer Schädigung derselben führt. Man kann dies zwar durch zusätzliche Maßnahmen wie spezielle Katalysatoren oder eine sehr aufwändige Überwachung der Zellspannungen aller einzelnen Zellen verhindern oder bis zu einem gewissen Grad eindämmen, dies macht den Aufbau jedoch außerordentlich aufwändig und komplex, wiederum sowohl in der Konstruktion und Montage als auch hinsichtlich der Steuerung.

Die Aufgabe der hier vorliegenden Erfindung besteht deshalb darin, ein verbessertes Verfahren zum Starten der Brennstoffzelle eines Brennstoffzellensystems bei Temperaturen unter dem Gefrierpunkt von Wasser anzugeben.

Erfindungsgemäß wird diese Aufgabe durch ein Verfahren mit den Schritten im Anspruch 1 gelöst. Vorteilhafte Ausgestaltungen und Weiterbildungen ergeben sich aus den hiervon abhängigen Unteransprüchen.

Bei dem erfindungsgemäßen Verfahren ist es vorgesehen, dass in einem ersten Schritt vor dem eigentlichen Gefrierstart der Brennstoffzelle die Wasserstoffkonzentration in der Anode erhöht wird. Diese Erhöhung der Wasserstoffkonzentration in der Anode kann dabei so weit erfolgen, bis die in dem Abgas erlaubten Wasserstoffemissionen erreicht sind. Diese sollten gemäß einer vorteilhaften Weiterbildung der Idee nicht überschritten werden. Eine weitere sehr vorteilhafte Ausgestaltung der Idee sieht es dabei vor, dass in diesem ersten Schritt Wasserstoffkonzentrationen von mehr als 90%, vorzugsweise mehr als 95%, besonders bevorzugt mehr als 98% angestrebt werden.

Der eigentliche Gefrierstart erfolgt dann in einem zweiten und einem dritten Schritt, welche iterativ wiederholt werden, bis die Brennstoffzelle ihre volle Leistungsfähigkeit erreicht hat. Im zweiten Schritt wird dazu für eine festgelegte Zeitspanne der Anodendruck erhöht und bei erfolgender Luftzufuhr zu der Kathode der maximal mögliche Strom aus der Brennstoffzelle gezogen. Nach Ablauf einer festgelegten Zeitspanne erfolgt dann der dritte Schritt. In diesem dritten Schritt wird die Brennstoffzelle lastfrei geschaltet und der Anodendruck abgesenkt, um ihn zu Beginn des nachfolgend wieder gestarteten zweiten Schritts wieder erhöhen zu können. Der zweite und der dritte Schritt werden dabei mehrfach wiederholt, insbesondere bis die volle Leistungsfähigkeit der Brennstoffzelle gewährleistet ist, sodass diese im Normalbetrieb betrieben oder in einem quasi normalen Betrieb weiter betrieben werden kann, bis der Startvorgang des gesamten Brennstoffzellensystems abgeschlossen ist.

Das erfindungsgemäße Verfahren erlaubt dabei einen sehr einfachen und effizienten Gefrierstart der Brennstoffzelle. Dadurch ist es insbesondere möglich, das Design der Brennstoffzelle zu vereinfachen, da beim Design der Einzelzellen, und hier insbesondere der gasführenden Kanäle, keine oder sehr viel weniger Rücksicht auf eine potenzielle Blockierung durch gefrorenes Wasser genommen werden muss. Außerdem lässt sich der Aufwand für eine Gefrierstartvorbereitung des Brennstoffzellensystems, insbesondere durch Trocknungs- und Aufheizungsprozeduren beim Abstellen des Brennstoffzellensystems, wie sie eingangs erwähnt worden sind, reduzieren oder eliminieren. Hierdurch entstehen für die praktische Nutzung entscheidende Vorteile, insbesondere wenn das Brennstoffzellensystem in einem Fahrzeug zum Einsatz kommt, da hier häufige Wechsel zwischen Betriebsphasen und abgestellten Phasen auftreten, und da bei Fahrzeugen nie auszuschließen ist, dass diese bei Temperaturen unterhalb des Gefrierpunkts von Wasser abgestellt werden und dann auch wieder startfähig sein müssen.

Eine besonders günstige Ausgestaltung des erfindungsgemäßen Verfahrens sieht es dabei vor, dass die Änderung des Anodendrucks durch eine kombinierte Ansteuerung oder Regelung der Wasserstoffdosierung einerseits und eines Ablassventils für Medien in der Anode andererseits erreicht wird. Ein solches Ablassventil kann beispielsweise in einer Anodenrezirkulation um die Anode der Brennstoffzelle vorhanden sein, um, in Abhängigkeit von Konzentrationen oder zeitabhängig, Ansammlungen von inerten Gasen wie Stickstoff und Wasser bzw. Wasserdampf aus dem Anodenbereich bzw. dem Anodenkreislauf abzublasen. Es wird häufig auch als Purge-Ventil bezeichnet, entsprechend seiner englischen Bezeichnung Purge Valve. Eine Kombination der Ansteuerung dieses Ablassventils und der Ansteuerung der Wasserstoffdosierung andererseits erlaubt so die Einstellung des Anodendrucks und letztlich auch der Wasserstoffkonzentration im Anodenbereich.

Zu Beginn der Startprozedur kann es notwendig sein, Stickstoff, welcher sich während einer längeren Stillstandsphase in der Anode gesammelt hat, durch den Wasserstoff zu verdrängen, um überhaupt starten zu können. Hierfür muss die Dosierung entsprechend geöffnet werden und auch das Ablassventil offen sein. Um den Druck zu erhöhen kann bei weiterhin offener Dosierung das Ablassventil ganz oder teilweise geschlossen werden, sodass über die Kombination dieser beiden Möglichkeiten der Anodendruck und mittelbar auch die Konzentration an Wasserstoff in der Anode beeinflusst werden kann.

Eine sehr vorteilhafte Weiterbildung hiervon sieht es dabei vor, dass vor dem ersten Schritt der Anodendruck erhöht und die Funktion des Ablassventils geprüft wird. Bevor mit dem oben beschriebenen ersten Schritt die Prozedur zum Gefrierstart eingeleitet wird, kann also der Anodendruck erhöht werden, insbesondere durch ein Öffnen des Dosierventils bei weiterhin geschlossenem Ablassventil. Wird dieses dann geöffnet, muss sich der Anodendruck entsprechend reduzieren, sodass hierdurch das Ablassventil hinsichtlich seiner Funktionalität geprüft werden kann.

Wie bereits erwähnt sollte die Erhöhung der Wasserstoffkonzentration im ersten Schritt, und zwar gemäß einer vorteilhaften Weiterbildung bei offenem Ablassventil, solange erfolgen, bis zulässige Emissionsgrenzen für Wasserstoff in dem Abgas erreicht werden.

Eine weitere sehr günstige Ausgestaltung des erfindungsgemäßen Verfahrens sieht es dabei vor, dass während des dritten Schritts, in welchem die Brennstoffzelle lastfrei geschaltet und der Anodendruck abgesenkt wird, keine weitere Zufuhr von Wasserstoff erfolgt, um so ein möglichst schnelles Absinken des Anodendrucks zu ermöglichen, welcher dann im nachfolgend wieder ausgeführten zweiten Schritt des Verfahrens wieder aufgebaut wird.

Eine besonders vorteilhafte Ausgestaltung sieht es ferner vor, dass im dritten Schritt die Luftzufuhr gegenüber der Luftzufuhr im zweiten Schritt verringert wird. Eine solche Verringerung der Luftzufuhr im dritten Schritt spart Energie im Bereich der Luftfördereinrichtung ein und ist aufgrund der Verringerung oder des Abschaltens der Wasserstoffdosierung und der nicht anliegenden Last ohnehin nicht notwendig.

Genauso kann es in einer weiteren Ausgestaltung vorgesehen sein, dass während des ersten Schritts die Luftzufuhr auf einem geringeren Niveau als im nachfolgenden zweiten Schritt erfolgt. Auch in diesem ersten Schritt, in dem die Wasserstoffkonzentration auf der Anodenseite hochgefahren wird, kann bereits eine Luftzufuhr erfolgen. Dabei muss jedoch kein so großer Volumenstrom gefördert werden, wie im nachfolgenden Schritt, bei dem die maximal mögliche Last aus der Brennstoffzelle gezogen wird.

Gemäß einer weiteren vorteilhaften Ausgestaltung ist es ferner vorgesehen, dass während der Anodendruck vor dem ersten Schritt, also zur Überprüfung des Ablassventils, erhöht wird, keine Luftzufuhr erfolgt. In dieser Phase ist noch keine Luftzufuhr notwendig, sodass die hierfür erforderliche Energie gänzlich eingespart werden kann.

Die Dosierung von Wasserstoff in die Anode kann dabei in beliebiger Art und Weise ausgestaltet sein. Bei dem oben bereits erwähnten Ausführungsbeispiel mit einer Anodenrezirkulation kann diese insbesondere über eine Gasstrahlpumpe als Rezirkulationsfördereinrichtung erfolgen. Dabei ist es gemäß einer vorteilhaften Ausgestaltung des Verfahrens vorgesehen, dass die Dosierung des Wasserstoffs in die Anode pulsierend erfolgt. Eine solche pulsierende Dosierung von Wasserstoff in die Anode wird häufig im Normalbetrieb eingesetzt, um Wasser besser aus dem Bereich der Anode auszutragen und so die gesamten Flächen der Einzelzellen der Brennstoffzelle gleichmäßig mit Wasserstoff anströmen zu können. Auch für die Gefrierstartprozedur kann eine solche pulsierende Dosierung sinnvoll sein, sodass diese auch während dessen bereits erfolgen kann, sodass keine alternativen oder ergänzenden Methoden für die Dosierung während der Schritte des Verfahrens vorgesehen werden müssen.

Weitere vorteilhafte Ausgestaltungen des erfindungsgemäßen Verfahrens ergeben sich auch aus dem Ausführungsbeispiel, welches nachfolgend unter Bezugnahme auf die Figuren näher beschrieben ist.

Dabei zeigen:
- Fig. 1: ein prinzipmäßig angedeutetes Brennstoffzellensystem in einem schematisch dargestellten Fahrzeug; und
- Fig. 2: ein Zustandsdiagramm von für das erfindungsgemäße Verfahren relevanten Größen über der Zeit während des erfindungsgemäßen Verfahrens.

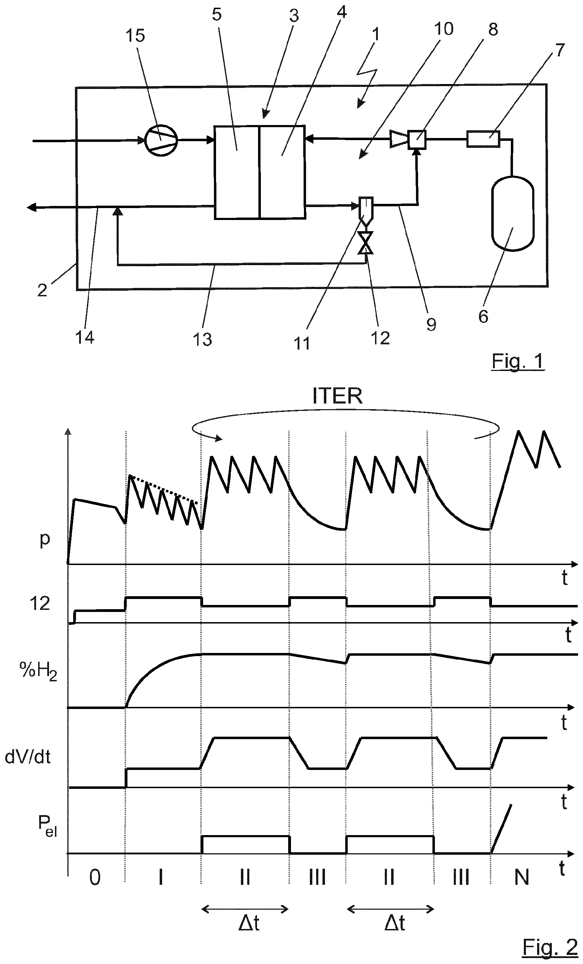

In der Darstellung der Figur 1 ist stark schematisiert ein Brennstoffzellensystem 1 in einem noch stärker schematisiert angedeuteten Fahrzeug 2 zu erkennen. Das Brennstoffzellensystem 1 soll dort elektrische Antriebsleistung zur Verfügung stellen. Ein solches Brennstoffzellensystem 1, wie es hier exemplarisch dargestellt ist, ist für den Fachmann prinzipiell bekannt. Deshalb wird auf die Funktionalität und die einzelnen Komponenten nachfolgend nur kurz eingegangen.

Den Kern eines solchen Brennstoffzellensystems 1 bildet eine Brennstoffzelle 3, welche typischerweise als Stapel von Einzelzellen, als sogenannter Brennstoffzellenstack oder Brennstoffzellenstapel, ausgebildet ist. In der Darstellung der Figur 1 ist rein beispielhaft eine gemeinsame Anode 4 und eine gemeinsame Kathode 5 dieser Brennstoffzelle 3 dargestellt. Der Anode 4 wird Wasserstoff aus einem Druckgasspeicher 6 zugeführt. Über ein Druckregel- und Dosierventil 7 sowie in dem hier dargestellten Ausführungsbeispiel eine Gasstrahlpumpe 8, welche auch als Injektor bezeichnet wird, gelangt der Wasserstoff in die Anode 4. Nicht verbrauchter Wasserstoff gelangt zusammen mit inerten Gasen und einem Teil des Produktwassers aus der Anode 4 über eine Rezirkulationsleitung 9 zurück zu der Gasstrahlpumpe 8 und wird von dieser angesaugt, wobei der frische Wasserstoff aus dem Druckgasspeicher 6 als Treibstrahl dient. Alternativ oder ergänzend wäre hier auch ein Gebläse zur Förderung des rezirkulierten Anodenabgases denkbar.

Aus diesem an sich bekannten sogenannten Anodenkreislauf 10 wird von Zeit zu Zeit oder in Abhängigkeit von beispielsweise einer Konzentration von Stickstoff in dem Anodenkreislauf 10 Gas und Wasser über einen Wasserabscheider 11 und ein Ablassventil 12, welches auch als Purge-Ventil bezeichnet wird, abgelassen. Über eine Abgasleitung 13 gelangt dieses abgelassene Abgas beispielsweise in eine Abluftleitung 14 aus der Kathode 5 der Brennstoffzelle 3 und somit mit der Abluft der Kathode 5 verdünnt in die Umgebung. Diese Verdünnung ist sinnvoll, da Wasserstoffemissionen in dem Abgas der Abgasleitung 13 auftreten, welche durch die Abluft soweit verdünnt werden können, dass sie im Normalbetrieb nur noch unkritische Emissionen darstellen.

Die Kathode 5 wird mit Luft als Sauerstofflieferant versorgt. Hierfür dient eine Luftfördereinrichtung 15, welche beispielsweise als Strömungsverdichter ausgebildet sein kann. Häufig ist diese Luftfördereinrichtung 15 dabei außerdem mit einer Abluftturbine in der Abluftleitung 14 verbunden, um Druckenergie aus dem System zurückzugewinnen und zum Antrieb der Luftfördereinrichtung 15 einsetzen zu können. Auch dies ist hier zur Vereinfachung der Abbildung nicht dargestellt. Ebenso wurde auf die Darstellung eines Befeuchters für die Zuluft verzichtet.

In der Praxis ist es nun so, dass innerhalb der Brennstoffzelle 3 flüssiges Produktwasser während der elektrochemischen Umsetzung von Wasserstoff und Sauerstoff zu elektrischer Energie anfällt. Dieses Produktwasser ist hoch rein und wird deshalb typischerweise beim Erreichen des Gefrierpunkts von Wasser innerhalb der Brennstoffzelle 3 einfrieren. Während des Betriebs ist dies kein Thema, da die typische Temperatur der Brennstoffzelle 3 in der Größenordnung von 70° C bis 100° C liegt. Wird das Brennstoffzellensystem 1 jedoch abgestellt, und zwar bei Umgebungsbedingungen, welche Temperaturen unterhalb des Gefrierpunkts aufweisen, wie es insbesondere bei einem Fahrzeug 2 unvermeidbar ist, dann kann das Wasser in der Brennstoffzelle 3 einfrieren. Bei einem Wiederstart des Fahrzeugs 2 bzw. seines Brennstoffzellensystems 1 muss dann dafür gesorgt werden, dass die Brennstoffzelle 3 möglichst schnell in Betrieb gehen kann, und dabei möglichst schonend behandelt wird, um die Lebensdauer der Brennstoffzelle 3 nicht unnötig zu reduzieren. Gleichzeitig soll der Ablauf einfach und effizient sein und auf komplexe konstruktive Maßnahmen und beispielsweise hochbeständige Katalysatorbestandteile oder entsprechend große Mengen an Katalysator verzichten können. Aus diesem Grund wird für einen solchen sogenannten Gefrierstart des Brennstoffzellensystems 1 das nachfolgend beschriebene Verfahren eingesetzt.

In der Darstellung der Figur 2 ist ein Diagramm verschiedener Größen innerhalb des Brennstoffzellensystems 1 über der Zeit t dargestellt. Von oben nach unten sind diese Größen zuerst der Anodendruck p in der Anode 4 der Brennstoffzelle 3. Als zweites von oben ist die Stellung des Ablassventils 12 entsprechend dargestellt. Als drittes von oben ist die Wasserstoffkonzentration %H₂ wiederum in der Anode 4 bzw. dem Anodenkreislauf 10 aufgetragen. Als viertes ist der Volumenstrom an Luft dV/dt, welcher durch die Luftfördereinrichtung 15 gefördert wird, aufgetragen. Ganz unten ist außerdem die der Brennstoffzelle 3 entnommene elektrische Leistung Pₑₗ gezeigt. Unterhalb der untersten Zeitachse t sind außerdem verschiedene Abschnitte des Verfahrens mit 0, N und den römischen Ziffern I, II, III gekennzeichnet, was später noch näher erläutert werden wird.

Bevor das eigentliche Verfahren startet, wird innerhalb eines ersten mit 0 bezeichneten Zeitraums geprüft, ob das Ablassventil 12 funktionsfähig ist. Hierfür wird der Anodendruck erhöht, beispielsweise indem bei zuerst geschlossenem Ablassventil 12 über die Druckregel- und Dosiereinrichtung 7 Wasserstoff zudosiert wird. Danach wird das Ablassventil 12 teilweise geöffnet und dementsprechend muss der Anodendruck p wieder absinken. Wenn er dies nicht tut, muss von einer Fehlfunktion des Ablassventils 12 ausgegangen werden, beispielsweise ist dieses eingefroren. Dies müsste zuerst behoben werden, beispielsweise durch ein Auftauen des Ablassventils 12 mittels einer elektrischen Beheizung des Ventils oder dergleichen.

Ist eine korrekte Funktion des Ablassventils 12 gegeben, so wie es in der Darstellung der Figur 2 angedeutet ist, dann wird in einem ersten Schritt I des Gefrierstartverfahrens, immer noch vor dem eigentlichen Gefrierstart der Brennstoffzelle 3, die Wasserstoffdosierung geöffnet, um die Anode 4 mit Wasserstoff zu füllen und in der Anode 4 verbliebene Luft oder Stickstoff aus der Stillstandsphase des Brennstoffzellensystems 1 über das dann geöffnete Ablassventil 12 in die Umgebung abzugeben. Der Anodendruck p verhält sich dabei wie in der Darstellung angedeutet. Die einzelne Zacken kommen dabei von einer typischerweise genutzten pulsierenden Dosierung des Wasserstoffs, welche insbesondere aus den daraus resultierenden Vorteilen für den Normalbetrieb typischerweise genutzt wird. Prinzipiell wäre auch ein Verzicht auf diese pulsierende Wasserstoffdosierung denkbar. Dann würde sich der im ersten Verfahrensschritt I durch die punktierte Linie angedeutete Anodendruck p ergeben. Wie aus der Konzentration %H₂ zu erkennen ist, steigt in dieser Zeit die Wasserstoffkonzentration in der Anode 4 entsprechend an, und zwar insbesondere soweit, wie es aufgrund der zulässigen Emissionsgrenzwerte möglich ist. Gleichzeitig wird die Luftfördereinrichtung 15 bereits betrieben, sodass ein gewisser Luftstrom dV/dt strömt, welcher insbesondere auch dazu dient, das Abgas aus der Anode 4 entsprechend zu verdünnen. Im Idealfall werden nun Wasserstoffkonzentrationen von mehr als 98% am Ende des ersten Verfahrensschritts I in der Anode 4 erreicht.

Im zweiten Verfahrensschritt II, welcher sich dann anschließt, erfolgt der eigentliche Gefrierstart, indem bei in einer Ausführungsmöglichkeit mit einer verringerter Öffnung des Ablassventils 12 und vergrößertem Volumenstrom dV/dt der Luftfördereinrichtung 15 die Brennstoffzelle 3 mit dem maximal möglichen Strom belastet wird, sodass eine elektrische Leistung Pₑₗ aus der Brennstoffzelle 3 gezogen wird, wie es im Diagramm der Figur 2 ganz unten zu erkennen ist. Die verringerte Öffnung des Ablassventils 12 kann besonders vorteilhaft in einem PWM-Verfahren durchgeführt werden, wobei die Stellung des Ablassventils 12 im Allgemeinen aus der gewählten Kombination von Volumenstrom dV/dt und Druck p resultiert. Diese Situation wird für eine vorgegebene Zeitspanne Δt beibehalten. Für die Festlegung der Zeitspanne Δt kommen verschiedene Verfahren in Frage, außer einer reinen Zeitermittlung, so zum Beispiel auch das Erreichen einer Temperaturschwelle, eines vorbestimmten Stromumsatz (Integral von Strom über die Zeit) aber auch andere.

Dann wird im dritten Verfahrensschritt III die elektrische Leistung Pₑₗ durch Abschalten des Stroms reduziert, gleichzeitig wird die Wasserstoffdosierung abgeschaltet und das Ablassventil 12 weiter geöffnet. Hierdurch kommt es zu einem Abfallen des Anodendrucks p, wobei gleichzeitig der Volumenstrom dV/dt der Luft reduziert wird. Durch den nicht mehr nachdosierten Wasserstoff bei geöffnetem Ablassventil kommt es außerdem zu einer Reduzierung der Wasserstoffkonzentration %H₂.

Im Anschluss an diesen dritten Verfahrensschritt III wird dann der Anodendruck p wieder erhöht, der zugeführte Volumenstrom an Luft dV/dt wieder erhöht und die Dosierung für den Wasserstoff wieder geöffnet, sodass sich auch die Konzentration %H₂ an Wasserstoff entsprechend erhöht. All dies erfolgt wieder bei einer reduzierten Öffnung des Ablassventils 12 und dem maximalen Strom, welcher aus der Brennstoffzelle 3 gezogen werden kann, sodass sich also wieder eine entsprechende elektrische Last Pₑₗ einstellt. Dieser Verfahrensschritt ist wieder der zweite Verfahrensschritt II. An ihn schließt sich dann, wie es in dem Diagramm zu erkennen ist, wiederum der Abbau des Anodendrucks im Rahmen des dritten Verfahrensschritts III an. Die Verfahrensschritte II und III werden in dem Diagramm also jeweils zweimal durchlaufen. In der Praxis findet hier eine entsprechende Iteration statt, sodass diese Verfahrensschritte II und III für einen längeren Zeitraum immer wieder durchlaufen werden, bis die Leistungsfähigkeit der Brennstoffzelle gegeben ist. Dies ist durch den oval gebogenen Pfeil ITER oberhalb der Abschnitte II und III im Diagramm der Figur 2 entsprechend angedeutet. Nachdem die normale Leistungsfähigkeit der Brennstoffzelle vorliegt, wird diese Iteration beendet, der Gefrierstart ist somit quasi beendet und die Brennstoffzelle kann in ihrem Normalbetrieb N, welcher auf dem ganz rechten Abschnitt der Zeitachse t angedeutet ist, in der gewünschten Art und Weise betrieben werden.

Hierbei kann zum Beispiel ein Erreichen einer Temperaturgrenze als Hauptkriterium zur Bestimmung der Leistungsfähigkeit der Brennstoffzelle verwendet werden. Es kommen aber auch andere Möglichkeiten für eine Bestimmung der Leistungsfähigkeit der Brennstoffzelle in Frage, so zum Beispiel einfach eine maximale Anzahl an Iterationen, eine Gesamtenergiemenge, ein Stromintegral, eine ausreichende Polarisationskurve oder viele andere.

Durch den mehrfachen Wechsel zwischen kurzzeitiger Belastung und nachfolgendem Abbau des Anodendrucks ist ein Gefrierstart der Brennstoffzelle 3 des Brennstoffzellensystems 1 möglich, ohne dass komplexe und aufwändige zusätzliche Bauteile und/oder eine aufwändige Einzelzellüberwachung oder dergleichen notwendig sind. Somit können konstruktive und verfahrenstechnische Maßnahmen, um die Gefrierstartfähigkeit der Brennstoffzelle zu verbessern, reduziert werden oder es kann auf derartige Maßnahmen gänzlich verzichtet werden, was den Betrieb einfach, effizient, energiesparend und den Aufbau klein, leicht und kostengünstig macht.

## Patentansprüche

1. Verfahren zum Starten einer Brennstoffzelle (3) in einem Brennstoffzellensystem (1), bei Temperaturen unterhalb des Gefrierpunkts von Wasser,
**dadurch gekennzeichnet, dass**
- in einem ersten Schritt (I) die Wasserstoffkonzentration (%H₂) in der Anode (4) erhöht wird; wonach
- in einem zweiten Schritt (II) für eine festgelegte Zeitspanne (Δt) ein Anodendruck (p) erhöht und bei erfolgender Luftzufuhr zu der Kathode (5) der maximal mögliche Strom aus der Brennstoffzelle (3) gezogen wird; wonach
- in einem dritten Schritt (III) die Brennstoffzelle (3) lastfrei geschaltet und der Anodendruck (p) abgesenkt wird; und wonach
- der zweite Schritt (II) und der dritte Schritt (III) so lange aufeinanderfolgend wiederholt werden, bis eine ausreichende Leistungsfähigkeit der Brennstoffzelle (3) für ihren Normalbetrieb erreicht wird.

2. Verfahren nach Anspruch 1,
**dadurch gekennzeichnet, dass**
die Änderung des Anodendrucks (p) durch eine kombinierte Ansteuerung oder Regelung der Wasserstoffdosierung (7) und eines Ablassventils (12) für Medien aus der Anode (4) erreicht wird.

3. Verfahren nach Anspruch 2,
**dadurch gekennzeichnet, dass**
vor dem ersten Schritt (I) der Anodendruck (p) erhöht und die Funktion des Ablassventils (12) geprüft wird.

4. Verfahren nach Anspruch 2 oder 3,
**dadurch gekennzeichnet, dass**
die Erhöhung der Wasserstoffkonzentration (%H₂) im ersten Schritt (I) bei offenem Ablassventil (12) so lange erfolgt, bis zulässige Emissionsgrenzen für Wasserstoff in dem Abgas erreicht werden.

5. Verfahren nach einem der vorherigen Ansprüche,
**dadurch gekennzeichnet, dass**
die Erhöhung der Wasserstoffkonzentration (%H₂) im ersten Schritt (I) auf mehr als 90%, vorzugsweise mehr als 95%, besonders bevorzugt mehr als 98%, erfolgt.

6. Verfahren nach einem der vorherigen Ansprüche,
**dadurch gekennzeichnet, dass**
während des dritten Schritts (III) keine Zufuhr von Wasserstoff in die Anode (4) erfolgt.

7. Verfahren nach einem der vorherigen Ansprüche,
**dadurch gekennzeichnet, dass**
während des dritten Schritts (III) die Luftzufuhr gegenüber der im zweiten Schritt (II) verringert wird.

8. Verfahren nach einem der vorherigen Ansprüche,
**dadurch gekennzeichnet, dass**
während des ersten Schritts (I) die Luftzufuhr auf einem geringeren Niveau als während des nachfolgenden zweiten Schritts (II) erfolgt.

9. Verfahren nach einem der Ansprüche 3 bis 8,
**dadurch gekennzeichnet, dass**
während der Anodendruck (p) vor dem ersten Schritt (I) erhöht wird, keine Luftzufuhr erfolgt.

10. Verfahren nach einem der Ansprüche vorherigen Ansprüche,
**dadurch gekennzeichnet, dass**
die Dosierung von Wasserstoff in die Anode (4) pulsierend erfolgt.

## Claims

1. A method for starting a fuel cell (3) in a fuel cell system (1), at temperatures below the freezing point of water,
**characterized in that**
- in a first step (I), the hydrogen concentration (%H₂) in the anode (4) is increased; whereafter
- in a second step (II), an anode pressure (p) is increased for a specified period of time (Δt) and when air is supplied to the cathode (5), the maximum possible current is drawn from the fuel cell (3); whereafter
- in a third step (III), the fuel cell (3) is switched to no-load operation and the anode pressure (p) is lowered; and whereafter
- the second step (II) and the third step (III) are repeated in succession until a sufficient performance of the fuel cell (3) for its normal operation is achieved.

2. The method of claim 1,
**characterized in that**
the change in the anode pressure (p) is achieved by a combined control or regulation of the hydrogen dosing (7) and of a drain valve (12) for media from the anode (4).

3. The method of claim 2,
**characterized in that**
before the first step (I), the anode pressure (p) is increased and the operation of the drain valve (12) is checked.

4. The method of claim 2 or 3,
**characterized in that**
the hydrogen concentration (%H₂) is increased in the first step (I) with the discharge valve (12) open until permissible emission limits for hydrogen in the exhaust gas are achieved.

5. The method of any one of the preceding claims,
**characterized in that**
the hydrogen concentration (%H₂) is increased in the first step (I) to more than 90%, preferably more than 95%, particularly preferably more than 98%.

6. The method of any one of the preceding claims,
**characterized in that**
during the third step (III), no hydrogen is supplied into the anode (4) .

7. The method of any one of the preceding claims,
**characterized in that**
during the third step (III), the air supply is reduced compared to that in the second step (II).

8. The method of any one of the preceding claims,
**characterized in that**
during the first step (I), the air supply is at a lower level than during the subsequent second step (II).

9. The method of any one of claims 3 to 8,
**characterized in that**
while the anode pressure (p) is increased prior to the first step (I), no air is supplied.

10. The method of any one of the preceding claims,
**characterized in that**
the dosing of hydrogen into the anode (4) takes place in a pulsating manner.

## Revendications

1. Procédé pour démarrer une pile à combustible (3) dans un système de pile à combustible (1), à des températures au-dessous du point de congélation de l'eau,
**caractérisé en ce que**
- dans une première étape (I) la concentration en hydrogène (%H₂) dans l'anode (4) est augmentée ; après quoi
- dans une deuxième étape (II) pendant un laps de temps (Δt) défini une pression d'anode (p) est augmentée et lors de l'amenée d'air subséquente à la cathode (5) le courant possible maximal est soutiré de la pile à combustible (3) ; après quoi
- dans une troisième étape (III) la pile à combustible (3) est branchée sans charge et la pression d'anode (p) est abaissée ; et après quoi
- la deuxième étape (II) et la troisième étape (III) sont répétées successivement jusqu'à ce qu'une performance suffisante de la pile à combustible (3) pour son fonctionnement normal soit atteinte.

2. Procédé selon la revendication 1,
**caractérisé en ce que**
la modification de la pression d'anode (p) est atteinte par une commande ou régulation combinée du dosage d'hydrogène (7) et d'une soupape de décharge (12) pour les milieux provenant de l'anode (4).

3. Procédé selon la revendication 2,
**caractérisé en ce que**
avant la première étape (I) la pression d'anode (p) est augmentée et la fonction de la soupape de décharge (12) est contrôlée.

4. Procédé selon la revendication 2 ou 3,
**caractérisé en ce que**
l'augmentation de la concentration en hydrogène (%H₂) dans la première étape (I) s'effectue lorsque la soupape de décharge (12) est ouverte aussi longtemps que des limites d'émission admissibles pour l'hydrogène dans les gaz d'échappement sont atteintes.

5. Procédé selon l'une quelconque des revendications précédentes,
**caractérisé en ce que**
l'augmentation de la concentration en hydrogène (%H₂) dans la première étape (I) s'effectue à plus de 90 %, de préférence à plus de 95 %, de manière particulièrement préférée à plus de 98 %.

6. Procédé selon l'une quelconque des revendications précédentes,
**caractérisé en ce que**
pendant la troisième étape (III), aucune amenée d'hydrogène dans l'anode (4) ne s'effectue.

7. Procédé selon l'une quelconque des revendications précédentes,
**caractérisé en ce que**
pendant la troisième étape (III) l'amenée d'air par rapport à celle dans la deuxième étape (II) est réduite.

8. Procédé selon l'une quelconque des revendications précédentes,
**caractérisé en ce que**
pendant la première étape (I) l'amenée d'air s'effectue à un niveau plus bas que pendant la deuxième étape (II) suivante.

9. Procédé selon l'une quelconque des revendications 3 à 8,
**caractérisé en ce que**
pendant que la pression d'anode (p) est augmentée avant la première étape (I), aucune amenée d'air ne s'effectue.

10. Procédé selon l'une quelconque des revendications précédentes,
**caractérisé en ce que**
le dosage d'hydrogène dans l'anode (4) s'effectue de manière pulsatile.
